# EUROPÄISCHE PATENTSCHRIFT

(11) **EP 2 218 597 B1**
(45) Veröffentlichungstag und Bekanntmachung des Hinweises auf die Patenterteilung: **19.08.2015**
(21) Anmeldenummer: 10153192.9
(22) Anmeldetag: 10.02.2010
(51) Int. Cl.: B60H 1/00

(54) **Belüftungs-, Heizungs- oder Klimaanlage**
Heating, ventilating, or air-conditioning system
Système de ventilation, chauffage ou climatisation

(30) Priorität: 16.02.2009 DE 102009009064
(43) Veröffentlichungstag der Anmeldung: 18.08.2010
(73) Patentinhaber: MAHLE Behr GmbH & Co. KG, 70469 Stuttgart (DE)
(72) Erfinder: Litwing, Erich, 73565 Spraitbach (DE); Otzelberger, Norbert, 70806 Kornwestheim (DE); Zerelles, Paul, 70197 Stuttgart (DE)
(74) Vertreter: Grauel, Andreas

(56) Entgegenhaltungen:
- DE-A1- 3 330 951
- DE-A1- 3 740 133
- DE-A1-102006 060 551
- DE-C1- 19 651 669

## Beschreibung

Die Erfindung betrifft eine Belüftungs-, Heizungs- oder Klimaanlage, insbesondere für ein Kraftfahrzeug, gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Nach den jeweiligen Erfordernissen kann die Kraftfahrzeugklimaanlage dabei wirken, um die Luft in dem Kraftfahrzeuginnenraum zu erwärmen und/oder zu kühlen. Neben der Regulierung der Temperatur des Fahrzeuginnenraums haben moderne Kraftfahrzeugklimaanlagen jedoch auch die Funktion der Filterung unerwünschter Stoffe in der Luft.

Hierzu wird in den aus dem Stand der Technik bekannten Kraftfahrzeugklimaanlagen ein Filter eingesetzt, welcher Verunreinigungen wie z. B. in der Luft enthaltene Schmutzpartikel, sowohl im Umluftbetrieb der Kraftfahrzeugklimaanlage, in welchem die Luft aus dem Fahrzeuginnenraum in die Kraftfahrzeugklimaanlage angesaugt wird, als auch im Frischluftbetrieb, in welchem die Außenluft durch die Stirnwand des Kraftfahrzeugs bzw. der Kraftfahrzeugkarosserie in die Kraftfahrzeugklimaanlage angesaugt wird, entfernt.

In DE 10 2006 060 551 A1 wird eine Kraftfshrzeugklimaanlage beschrieben, mittels welcher sowohl von außen angesaugte Frischluft als auch aus dem Fahrzeuginnenraum angesaugte Umluft gefiltert wird. Der hierzu eingesetzte Filter ist auf der Motorraumseite der Stirnwand angeordnet, und die in den Fahrgastraum bzw. Fahrzeuginnenraum eingeleitete Luft kann sowohl im Frischluftbetrieb als auch im Umluftbetrieb durch ein und denselben Filter gereinigt werden. Für den Umluftbetrieb ist eine Strömungsverbindung zwischen dem Fahrgastraum und der Zuströmseite des Luftfilters vorgesehen. Im Umluftbetrieb wird mittels einer Gebläseeinrichtung Luft aus dem Fahrgastraum über die Strömungsverbindung zur Zuströmseite des Luftfilters gesaugt und nach dem Durchströmen des Luftfilters über mindestens eine Luftauslassöffnung wieder in den Fahrgastraum geblasen.

Dokument DE 19651669 offenbart eine Kraftfahrzeugklimaanlage nach dem Oberbegriff des Anspruchs 1.

Nachteilig bei den aus dem Stand der Technik bekannten Filteranordnungen ist jedoch, dass die Filter durch zu starken Wassereintritt schnell beschädigt werden, Insbesondere bei Üblicherweise horizontal liegenden Filtern sammelen sich Wasser, Schnee und Dreck auf dem Filter an Wasser und schmelzender Schnee können durch den Filter in das mit einem Motor versehene Gebläse eindringen Durch den Wassereintritt kann es dann zu Auställen kommen. Auch kann wieder einfrierendes Wasser zu einem blockierenden Gebläse führen.

Die Aufgabe der vorliegenden Erfindung besteht deshalb darin, eine Belüftungs-, Heizungs- oder Klimaanlage, insbesondere für ein Kraftfahrzeug, vorzusehen, bei welcher eine Wasser- bzw. Schneeabscheidung realisiert wird, mittels welcher ein Übermäßiger Wassereintritt in den Filter bzw. Schneeablagerungen auf dem Filter vermieden werden.

Diese Aufgabe wird durch eine Belüftungs-, Heizungs- oder Klimaanlage mit den Merkmalen gemäß Anspruch 1 gelöst. Vorteilhafte Weiterbildungen sind in den Unteransprüchen definiert.

Gemäß der Erfindung ist eine Belüftungs-, Heizungs- oder Klimaanlage, insbesondere für ein Kraftfahrzeug, mit ein Luftverteilersystem versehen, in welchem ein Gebläse-Filter-System angeordnet ist, wobei ein Filter des Gebläse-Filter-Systems eine erste iuftzuströmseitige Fläche, durch welche durch das Luftverteilersystem zugeführte Luft in den Filter eintritt, und eine zweite iuftabströmseitige Fläche, aus welcher die an der ersten Fläche zugeführte Luft aus dem Filter austritt, umfasst. Erfindungsgemäß wird eine Frischluftströmung durch das Luftverteilersystem über einen Frischlufteinlass zu dem Filter geleitet, wobei die Frischluftströmung von dem Frischlufteinlass zum Eintritt in den Filter an der ersten luftzuströmseitigen Fläche um mehr als 150°, bevorzugt mehr als 160°, insbesondere mehr als 170° und besonders bevorzugt um mehr oder etwa 180° umgelenkt wird. Die von außen angesaugte Frischluft wird durch die erfindungsgemäße Anordnung umgelenkt, so dass angesaugtes Wasser, Schnee oder Eispartikel überhaupt nicht zum Filter bzw. durch den Filter hindurch zu dem Gebläse gelangen. Vielmehr werden Wasser, Schnee, Eis- oder auch Schmutzpartikel durch die Luftführung bedingt an den Gehäusewänden des Luftverteilersystems aus der Luft getrennt und abgeschieden, so dass sie nicht mehr zum Filter bzw. zum Gebläse des Gebläse-Filter-Systems gelangen können. Somit wird auch zusätzlich zu der fährzeugseitigen Wasserabscheidung erfindungsgemäß eine klimaanlagenseitige Wasserabscheidung vorgesehen.

Gemäß einer bevorzugten Ausführungsform sind die erste und die zweite Fläche des Filters im Wesentlichen parallel zueinander angeordnet.

Gemäß einer bevorzugten Ausführungsform wird die Frischluftströmung an einer Gehäusewand des Luftverteilersystems umgelenkt. Das hat den Vorteil, dass Wasser, Eis- und Schmutzpartikel sowie Schnee vor Eintritt in den Filter an der Gehäusewand abgeschieden und somit aus der in den Filter eintretenden Luft entfernt werden.

Gemäß der Erfindung wird ein Gebläse des Gebläse-Filter-Systems gegenüberliegend der zweiten luftabströmseitigen Fläche des Filters angeordnet. Hierdurch wird eine vorteilhafte Konfiguration erzielt, bei welcher der Filter bzw. die Zuströmseite des Filters vor dem Gebläse angeordnet ist. Das Gebläse ist insbesondere als Radialgebläse ausgeführt, dessen Ansaugöffnung etwa konzentrisch zur Achse des Gebläselaufrads liegt. Bevorzugt liegen die Ansaugöffnung des Gebläses und die Abströmfläche des Filters unmittelbar gegenüber.

Besonders bevorzugt ist die zweite luftabströmseitige Fläche im Wesentlichen parallel zu dem Gebläse des Gebläse-Filter-Systems angeordnet. Hierdurch wird einerseits eine kompakte Einheit bzw. Bauweise erzielt, was bezüglich des erforderlichen Bauraums von Vorteil ist, Andererseits liegt hierdurch die gesamte zweite luftabströmseitige Fläche des Filters direkt vor dem Gebläse.

Gemäß der Erfindung sind die erste und zweite Fläche des Filters im Wesentlichen senkrecht zu einer Welle eines Gebläsemotors angeordnet.

Vorzugsweise ist der Filter des Gebläse-Filter-Systems angeordnet, um die durch das Luftverteilungssystem geleitete Luft sowohl in einem Umluftbetrieb als auch in einem Frischluftbetrieb der Belüftungs-, Heizungs- oder Klimaanlage zu filtern.

Auch ist es bevorzugt, wenn unterhalb des Filters ein Ablauf für Schmutz- und Kondenswasser vorgesehen ist Somit werden Schmutzpartikel und Wasser nicht nur aus dem jeweiligen Luftstrom abgeschieden sondern auch direkt aus der Belüftungs-, Heizungs- oder Klimaanlage und aus dem Kraftfahrzeug bzw. aus dem Fahrzeuginnenraum abgeleitet.

Gemäß einer weiteren bevorzugten Ausführungsform weist der Filter an der Unterseite einen demontierbaren bzw. abnehmbaren Deckel auf, wodurch der Filter besonders wartungsfreundlich ist. Im Servicefall kann einfach der Deckel unterhalb des Filters entfernt bzw. demontiert werden, der Filter wird nach unten in den Fußraum des Beifahrers herausgenommen und durch einen neuen Filter ersetzt, wonach das Filtergehäuse wiederum durch den Deckel verschlossen wird.

Es ist auch vorteilhaft, wenn die Frischluftströmung durch den Frischlufteinlass durch eine bewegbare erste Klappe, insbesondere durch eine Trommelklappe, regelbar ist.

Gemäß noch einer weiteren bevorzugten Ausführungsform wird Umluft aus dem Fahrzeuginnenraum durch das Luftverteilersystem über einen Umlufteinlass zu dem Filter geleitet.

Vorzugsweise ist auch die Umluftströmung durch den Umlufteinlass durch eine bewegbare zweite Klappe, insbesondere durch eine Trommelklappe, regelbar.

Gemäß einer besonders bevorzugten Ausführungsform ist der Filter in der Belüftungs-, Heizungs- oder Klimaanlage im Wesentlichen senkrecht verbaut. Wie bereits zuvor ausgeführt, führt das im Wesentlichen senkrechte Anordnen des Filters einerseits zu einer kompakten Bauform. Andererseits sammelt sich bei horizontal liegenden Filtern Wasser, Schnee und Dreck auf dem Filter an, wobei diese dann anschließend in den Filter und in das dahinter angeordnete Gebläse eindringen können. Bei "stehender" bzw. im Wesentlichen senkrechter Anordnung des Filters wird dieser Nachteil vermieden. Diese Einbaulage ist insbesondere als Einbaulage im verbauten Zustand in einem Fahrzeug zu betrachten.

Bevorzugt wird die Frischluft, dem Erischlufteinlass über einen Frischluftkanal zugeführt, der oberhalb des Gebläses verläuft, insbesondere etwa parallel zur Laufradachse des Gebläses. Vorteilhafterweise bildet eine unter Wandung des Frischluftkanals gleichzeitig einen Teil des Spiralgehäuses des Gebläses.

Vorzugsweise passiert die durch den Filter geleitete Frischluftströmung oder Umluftströmung, welche durch diesen an der luftabströmseitigen zweiten Fläche austritt, das Gebläse und wird zu einem Verdampfer der Klimaanlage durch das Luftverteilersystem weitergeleitet.

Vorzugsweise weist das Gebläse die Welle, welche bezüglich der Belüftungs-, Heizungs- oder Klimaanlage horizontal liegt, und ein Laufrad auf.

Gemäß einer weiteren bevorzugten Ausführungsform umfasst die Klimaanlage weiterhin einen Kondensator zum Kühlen des Luftstroms und/oder zumindest eine Heizeinrichtung zum Erwärmen des Luftstroms und/oder einen elektrischen Zuheizer und/oder ein Expansionsventil.

Im Nachfolgenden wird ein Ausführungsbeispiel der Erfindung unter Bezugnahme auf die beigefügte Zeichnungen näher beschrieben. Es zeigen:
- Fig. 1: einen Abschnitt einer Klimaanlage gemäß einer Ausführungsform;
- Fig. 2: eine Seitenansicht eines Gebläse-Filter-Systems gemäß einer Aus- führungsform;
- Fig. 3: eine Ansicht von oben auf den in Figur 1 gezeigten Abschnitt der Klimaanlage;
- Fig. 4: eine Schnittansicht durch den Abschnitt der Klimaanlage von Fig. 3 entlang der Linie A-A;
- Fig. 5: eine perspektivische Ansicht des in Fig. 3 gezeigten Abschnitts der Klimaanlage; und
- Fig. 6: eine weitere Ausführungaform eines Gebläse-Filter-Systems.

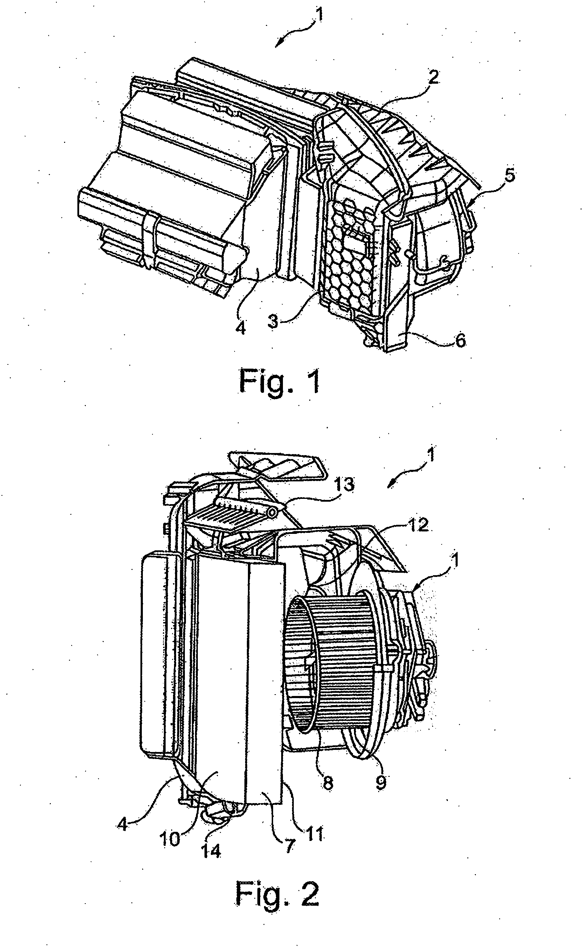

Figur 1 zeigt einen Abschnitt einer Klimaanlage gemäß einer Ausführungsform. Dargestellt in Figur 1 ist ein Gebläse-Filter-System 1, welches über ein Luftverteilersystem 2 mit einem Verdampfer 3 und weiteren nicht dargestellten Komponenten der Klimaanlage in Verbindung steht. Das Gebläse-Filter-System 1 weist einen Filter auf, welcher in einem Gehäuse 4 angeordnet ist. Hinter dem Filter ist ein Gebläse 5 vorgesehen. Der später noch detaillierter beschriebene Luftströmungsweg führt durch den Filter und das sich daran anschließende Gebläse über das Luftverteilersystem 2 in den Verdampfer 3, der in einer Verdampferaufnahme 6 untergebracht ist.
Figur 2 zeigt eine Seitenansicht des in Figur 1 dargestellten Abschnitts der Klimaanlage. Insbesondere ist in Figur 2 eine Seitenansicht des Gebläse-Filter-Systems 1 dargestellt. Wie in der Figur erkennbar ist, ist der Filter 7 gegenüberliegend dem Gebläse 5, welches im Wesentlichen aus einem eine Welle 8 und ein Laufrad 9 aufweisenden Gebläsemotor besteht, angeordnet. Der Filter 7 weist eine erste luftzuströmseitige Fläche 10, durch welche durch das Luftverteilersystem 2 zugeführte Luft in den Filter 7 eintritt, und eine zweite luftabströmseitige Fläche 11, welche parallel zu der ersten Fläche 10 angeordnet ist, aus welcher die an der ersten Fläche zugeführte Luft aus dem Filter austritt, auf. Der Filter 7 ist stehend angeordnet, wobei der Filter 7 und das Gebläse 5 bzw. eine Luftansaugseite 12 des Laufrads 9 parallel zueinander angeordnet sind, was unter anderem eine kompakte Bauweise ermöglicht, Oberhalb des Filters 7 ist eine als Frischluftklappe wirkende bewegbare erste Klappe 13 vorgesehen, welche zum Öffnen und Schließen eines Frischlufteinlasses, durch welchen eine Frischluftströmung eintritt, dient. Unterhalb des Filters 7 ist an dem Gehäuse 4 ein Ablauf 14 vorgesehen, durch welchen Schmutz- und Kondenswasser sowie andere Verunreinigungen und Partikel aus der Klimaanlage und aus dem Kraftfahrzeug abgeführt werden.

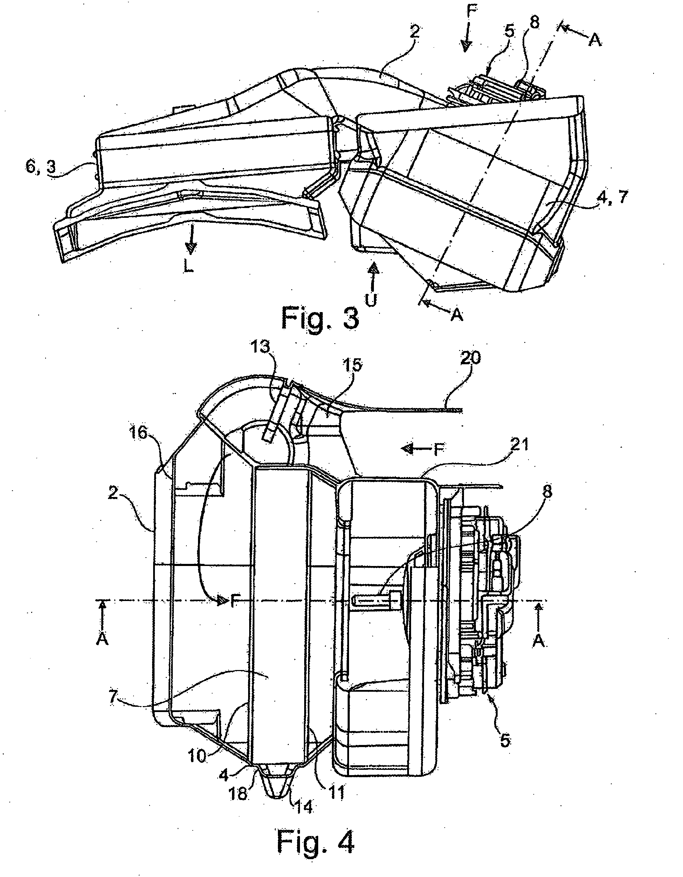

Figur 3 zeigt eine Ansicht von oben auf den in Figur 1 gezeigten Abschnitt der Klimaanlage gemäß einer Ausführungsform. Der Filter 7 ist in dem Gehäuse 4 angeordnet. Hinter dem Filter 7 ist das Gebläse 5 vorgesehen, welches in der Figur nur teilweise sichtbar ist. Die Klimaanlage kann sowohl im Frischluftbetrieb als auch im Umluftbetrieb arbeiten. Durch den durch F gekennzeichneten Pfeil wird die Strömungsrichtung der Frischluft angedeutet, welche in den Filter 7 eintritt, wenn die Klimaanlage im Frischluftbetrieb arbeitet, und durch den durch U gekennzeichneten Pfeil wird die Strämungsrichtung der Umluft angedeutet, welche in den Filter eintritt, wenn die Klimaanlage im Umluftbetrieb arbeitet. Der Strömungsverlauf der Frischluft F wird noch detailliert im Zusammenhang mit Figur 4 beschrieben werden. Von dem Gebläse 5 wird die angesaugte und durch den Filter 7 bereits gereinigte Frischluft F oder Umluft U über das Luftverteilersystem 2 an den Verdampfer 3 weitergeleitet und von dort aus an nicht weiter dargestellte Komponenten der Klimaanlage, wie z. B. an einen Heizkörper oder einen elektrischer Zuheizer etc.
Figur 4 zeigt eine Schnittansicht durch den Abschnitt der Klimaanlage von Figur 3 entlang der Linie A-A. Wie in der Figur erkennbar ist, wird die angesaugte Frischluftströmung F über einen Frischluftkanal 20 an einem Frischlufteinlass 15 durch die bewegbare erste Klappe 13, die hier als Trommelklappe ausgebildet ist, geregelt. Der Frischluftkanal 20 verläuft oberhalb des Gebläses 5, etwa parallel zur Laufradachse. Eine untere Wandung 21 des Frischluftkanals 20 bildet vorliegend einen Teil des Spiralgehäuses des Gebläses 5. Wenn die erste Klappe 13 in einer Stellung ist, in welcher sie die Öffnung an dem Frischlufteinlass 15 freigibt, tritt die Frischluftströmung F in den Abschnitt des Luftverteilersystems 2 ein, welcher sich vor dem Filter 7 befindet, wird dieser an einer Gehäusewand 16 umgelenkt, so dass die Frischluftströmung F um 180° umgelenkt ist, wenn sie an der luftzuströmseitigen ersten Fläche 10 des Filters 7 in diesen eintritt. Nachdem die Frischluftströmung F den Filter 7 passiert, tritt sie an der luftabströmseitigen zweiten Fläche 11 des Filters 7 wieder aus, wonach sie von dem Gebläse 5 über das Luftverteilersystem 2 zu dem Verdampfer 3 und den restlichen Komponenten der Klimaanlage geleitet wird, was in der Figur durch die Luftströmung L angedeutet ist.

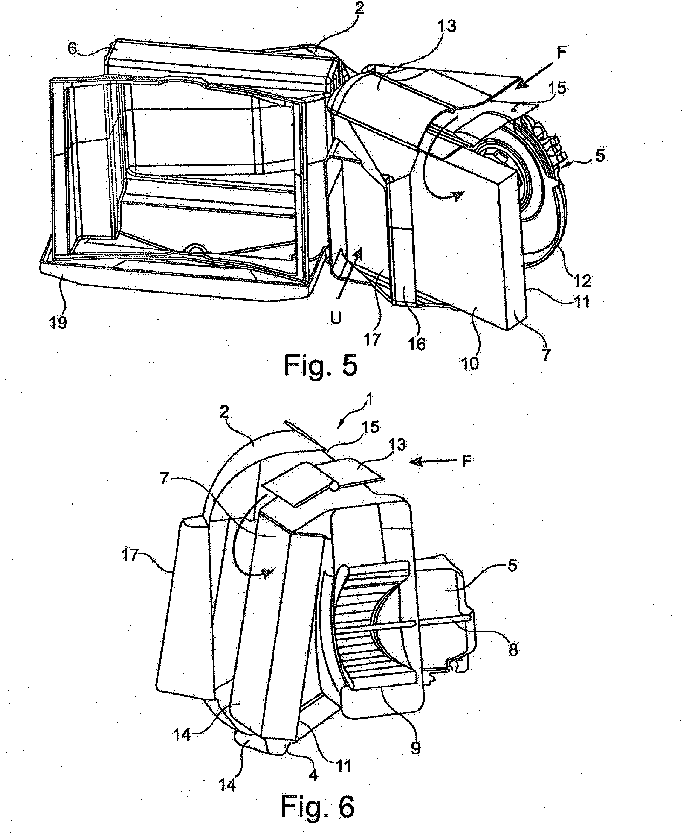

Figur 5 zeigt eine weitere perspektivische Ansicht des in Fig. 3 gezeigten Abschnitts der Klimaanlage. Hierbei ist wiederum die Umlenkung der Frischluftströmung F um etwa 180° von dem Frischlufteinlass 15 bis zu der luftzuströmseitigen ersten Fläche 10 des Filters 7 dargestellt, an welcher die Frischluftströmung F in den Filter 7 eintritt. Darüber hinaus ist die Strömungsrichtung der Umluftströmung U dargestellt, welche durch den Umlufteinlass 17 eintritt. Die Umluftströmung U wird an dem Umlufteinlass 17 ebenfalls durch Klappen (nicht dargestellt) geregelt, die bewegbar sind, um den Umlufteinlass 17 zu verschließen bzw. freizugeben.

Darüber hinaus ist an der Unterseite des Filters 7 das Gehäuse 4 mit einem abnehmbaren Deckel 18 versehen, an welchem auch der Ablauf 14 angeordnet ist. Ebenfalls in Figur 5 dargestellt ist eine Wanne 19, welche unterhalb des Verdampfers 3 angeordnet ist, um abgeschiedenes Wasser und Partikel zu sammeln und aus der Klimaanlage über einen nicht dargestellten Ablauf zu entfernen.

Schließlich zeigt Figur 6 eine weitere Ausführungsform eines Gebläse-Luft-Systems 1. Auch hierbei wird eine Frischluftströmung F an einem Frischlufteinlass 15 durch eine erste Klappe 13 geregelt. Die Frischluftströmung F wird ebenfalls an einer Gehäusewand 16 im Wesentlichen um 180° umgelenkt, bevor sie an der luftzuströmseitigen ersten Fläche 10 des Filters 7 in diesen eintritt. Eine Umluftströmung U tritt dagegen durch den Umlufteinlass 17 ein, um durch den Filter 7 hindurch zu passieren. Im Gegensatz zu der bisher beschriebenen Ausführungsform sind der Filter 7 und das Gebläse 5 jedoch nicht im Wesentlichen parallel zueinander angeordnet, sondern in einem spitzen Winkel.

Durch die oben beschriebene Anordnung der Luftansaugung - vor allem bezüglich der Frischluft - des Filters, des Wasserablaufs, und des Gebläses bzw. des Gebläsemotors wird eine zusätzliche Wasserabscheidung mit der Möglichkeit der Wasserabführung aus dem Kraftfahrzeug heraus realisiert. Der Filter des Gebläse-Filter-Systems weist darüber hinaus eine große Anströmfläche und eine hohe Wartungsfreundlichkeit auf.

### Bezugszeichenliste

- 1: Gebläse-Filter-System
- 2: Luftverteilersystem
- 3: Verdampfer
- 4: Gehäuse
- 5: Gebläse
- 6: Verdampferaufnahme
- 7: Filter
- 8: Welle
- 9: Laufrad
- 10: luftzuströmseitige erste Fläche
- 11: luftabströmseitige zweite Fläche
- 12: Luftansaugseite
- 13: erste Klappe
- 14: Ablauf
- 15: Frischlufteinlass
- 16: Gehäusewand
- 17: Umlufteinlass
- 18: Deckel
- 19: Wanne
- 20: Frischluftkanal
- 21: Wandung
- F: Frischluftströmung
- U: Umluftströmung
- L: Luftströmung

## Patentansprüche

1. Belüftungs-, Heizungs- oder Klimaanlage, in einem Kraftfahrzeug, mit einem Luftverteilersystem (2), in welchem ein Gebläse-Filter-System (1) angeordnet ist, wobei ein Filter (7) des Gebläse-Filter-Systems (1) eine erste luftzuströmseitige Fläche (10), durch welche durch das Luftverteilersystem (2) zugeführte Luft in den Filter (7) eintritt, und eine zweite luftabströmseitige Fläche (11), aus welcher die an der ersten Fläche (10) zugeführte Luft aus dem Filter (7) austritt, umfasst, wobei eine Frischluftströmung (F) durch das Luftverteilersystem (2) über einen Frischlufteinlass (15) zu dem Filter (7) geleitet wird, wobei die Frischluftströmung von dem Frischlufteinlass (15) bis zum Eintreten in den Filter (7) an der ersten luftzuströmseitigen Fläche (10) um mehr als 150° umgelenkt wird, **dadurch gekennzeichnet, dass** ein Gebläse (5) des Gebläse-Filter-Systems (1) gegenüberliegend der zweiten luftabströmseitigen Fläche (11) des Filters (7) angeordnet ist und die erste Fläche (10) und die zweite Fläche (11) des Filters (7) im Wesentlichen senkrecht zu einer Welle (8) eines Gebläsemotors des Gebläses (5) angeordnet sind.

2. Belüftungs-, Heizungs- oder Klimaanlage nach Anspruch 1, **dadurch gekennzeichnet, dass** die Frischluftströmung (F) an einer Gehäusewand (16) des Luftverteilersystems (2) umgelenkt wird.

3. Belüftungs-, Heizungs- oder Klimaanlage nach Anspruch 1 oder 2, **dadurch gekennzeichnet, dass** die zweite luftabströmseitige Fläche (11) im Wesentlichen parallel zu dem Gebläse (5) des Gebläse-Filter-Systems (1) angeordnet ist.

4. Belüftungs-, Heizungs- oder Klimaanlage nach einem oder mehreren der Ansprüche 1 bis 3, **dadurch gekennzeichnet, dass** der Filter (7) des Gebläse-Filter-Systems (1) angeordnet ist, um die durch das Luftverteilungssystem (2) geleitete Luft sowohl in einem Umluftbetrieb als auch in einem Frischluftbetrieb der Belüftungs-, Heizungs- oder Klimaanlage zu filtern.

5. Belüftungs-, Heizungs- oder Klimaanlage nach einem oder mehreren der Ansprüche 1 bis 4, **dadurch gekennzeichnet, dass** unterhalb des Filters (7) ein Ablauf (14) für Schmutz- und Kondenswasser vorgesehen ist.

6. Belüftungs-, Heizungs- oder Klimaanlage nach einem oder mehreren der Ansprüche 1 bis 5, **dadurch gekennzeichnet, dass** der Filter (7) an einer Unterseite einen demontierbaren Deckel (18) aufweist.

7. Belüftungs-, Heizungs- oder Klimaanlage nach einem oder mehreren der Ansprüche 1 bis 6, **dadurch gekennzeichnet, dass** die Frischluftströmung (F) durch den Frischlufteinlass (15) durch eine bewegbare erste Klappe (13), insbesondere durch eine Trommelklappe, regelbar ist.

8. Belüftungs-, Heizungs- oder Klimaanlage nach einem oder mehreren der Ansprüche 1 bis 7, **dadurch gekennzeichnet, dass** eine Umluftströmung (U) durch das Luftverteilersystem (2) über einen Umlufteinlass (17) zu dem Filter (7) geleitet wird.

9. Belüftungs-, Heizungs- oder Klimaanlage nach Anspruch 8, **dadurch gekennzeichnet, dass** die Umluftströmung (U) durch den Umlufteinlass (17) durch eine bewegbare zweite Klappe, insbesondere durch eine Trommelklappe, regelbar ist.

10. Belüftungs-, Heizungs- oder Klimaanlage nach einem oder mehreren der Ansprüche 1 bis 9, **dadurch gekennzeichnet, dass** der Filter (7) in der Klimaanlage im Wesentlichen senkrecht verbaut ist.

11. Belüftungs-, Heizungs- oder Klimaanlage nach einem oder mehreren der Ansprüche 8 bis 10, **dadurch gekennzeichnet, dass** die durch den Filter (7) geleitete Frischluftströmung (F) oder Umluftströmung (U), welche durch diesen an der luftabströmseitigen zweiten Fläche (11) austritt, durch das Gebläse (5) hindurch passiert und zu einem Verdampfer (3) der Klimaanlage durch das Luftverteilersystem (2) weitergeleitet wird.

12. Belüftungs-, Heizungs- oder Klimaanlage nach einem oder mehreren der Ansprüche 1 bis 11, **dadurch gekennzeichnet, dass** das Gebläse (5) die Welle (8), welche bezüglich der Belüftungs-, Heizungs- oder Klimaanlage horizontal liegt, und ein Laufrad (9) aufweist.

13. Belüftung-, Heizungs- oder Klimaanlage nach einem oder mehreren der Ansprüche 1 bis 12, **dadurch gekennzeichnet, dass** die Klimaanlage weiterhin einen Kondensator zum Kühlen des Luftstroms und/oder zumindest eine Heizeinrichtung zum Erwärmen des Luftstroms und/oder einen elektrischen Zuheizer und/oder ein Expansionsventil umfässt.

## Claims

1. Ventilation, heating or air conditioning system inside a motor vehicle, with an air distribution system (2) in which a fan-filter system (1) is mounted, wherein a filter (7) of the fan-filter system (1) comprises a first surface on the air intake side (10), through which the air supplied from the air distribution system (2) enters the filter (7), and a second surface on the air outlet side (11), through which the air fed in on the first surface (10) leaves the filter (7), wherein a fresh-air flow (F) is channelled to the filter (7) through the air distribution system (2) and over a fresh-air intake (15), wherein the fresh-air flow is diverted by more than 150° from the fresh-air intake (15) up to the entrance of the filter (7) on the first surface on the air intake side (10), **characterised in that** a fan (5) of the fan-filter system (1) is mounted opposite of the second surface on the air outlet side (11) of the filter (7) and the first surface (10) and the second surface (11) of the filter (7) are substantially arranged vertically to a shaft (8) of a fan motor for the fan (5).

2. Ventilation, heating or air conditioning system according to claim 1, **characterised in that** the fresh-air flow (F) is diverted at a housing wall (16) of the air distribution system (2).

3. Ventilation, heating or air conditioning system according to claim 1 or 2, **characterised in that** the second surface on the air outlet side (11) is substantially arranged parallel to the fan (5) of the fan-filter system (1).

4. Ventilation, heating or air conditioning system according to one or more of claims 1 to 3, **characterised in that** the filter (7) of the fan-filter system (1) is arranged in order to filter the air channelled through the air distribution system (2), irrespective whether the ventilation, heating or air conditioning system is in circulating air operating mode or in fresh-air operating mode.

5. Ventilation, heating or air conditioning system according to one or more of claims 1 to 4, **characterised in that** a drainage (14) for wastewater and condensation water is provided below the filter (7).

6. Ventilation, heating or air conditioning system according to one or more of claims 1 to 5, **characterised in that** the filter (7) is equipped with a removable cover (18) on the bottom side.

7. Ventilation, heating or air conditioning system according to one or more of claims 1 to 6, **characterised in that** the fresh-air flow (F) through the fresh-air intake (15) can be regulated by means of a movable first flap (13), in particular by means of a drum flap.

8. Ventilation, heating or air conditioning system according to one or more of claims 1 to 7, **characterised in that** a circulating airflow (U) is channelled to the filter (7) through the air distribution system (2) and over a circulating air intake (17).

9. Ventilation, heating or air conditioning system according to claim 8, **characterised in that** the circulating airflow (U) through the circulating air intake (17) can be regulated by means of a movable second flap, in particular by means of a drum flap.

10. Ventilation, heating or air conditioning system according to one or more of claims 1 to 9, **characterised in that** the filter (7) is substantially installed in a vertical position inside the air conditioning system.

11. Ventilation, heating or air conditioning system according to one or more of claims 8 to 10, **characterised in that** the fresh-air flow (F) or circulating airflow (U) channelled through the filter (7), which exits through this filter on the second surface on the air outlet side (11), passes through the fan (5) and is conducted to a vaporiser (3) of the air conditioning system through the air distribution system (2).

12. Ventilation, heating or air conditioning system according to one or more of claims 1 to 11, **characterised in that** the fan (5) is provided with a shaft (8), which is arranged horizontally with respect to the ventilation, heating or air conditioning system, as well as an impeller (9).

13. Ventilation, heating or air conditioning system according to one or more of claims 1 to 12, **characterised in that** the air conditioning unit additionally comprises a condenser for cooling the airflow and/or at least one heating unit for heating up the airflow and/or an electric auxiliary heater and/or an expansion valve.

## Revendications

1. Système de ventilation, de chauffage ou de climatisation dans un véhicule automobile, comprenant un système diffuseur d'air (2) dans lequel est disposé un système (1) ventilateur - filtre, où un filtre (7) du système (1) ventilateur - filtre comprend une première surface (10), côté arrivée d'air, par laquelle de l'air fourni à travers le système diffuseur d'air (2) entre dans le filtre (7), et comprend une seconde surface (11), côté sortie d'air, par laquelle l'air fourni à la première surface (10) sort du filtre (7), où un flux d'air frais (F) est dirigé à travers le système diffuseur d'air (2) via une entrée d'air frais (15), jusqu'au filtre (7), où le flux d'air frais s'écoulant depuis l'entrée d'air frais (15) jusqu'à l'entrée dans le filtre (7) est coudé de plus de 150° au niveau de la première surface (10), côté arrivée d'air, **caractérisé en ce qu'**un ventilateur (5) du système (1) ventilateur - filtre est disposé à l'opposé de la seconde surface (11), côté sortie d'air, du filtre (7), et la première surface (10) et la seconde surface (11) du filtre (7) sont disposées pratiquement de façon perpendiculaire à un arbre (8) d'un moteur du ventilateur (5).

2. Système de ventilation, de chauffage ou de climatisation selon la revendication 1, **caractérisé en ce que** le flux d'air frais (F) est coudé au niveau d'une paroi de carter (16) du système diffuseur d'air (2).

3. Système de ventilation, de chauffage ou de climatisation selon la revendication 1 ou 2, **caractérisé en ce que** la seconde surface (11), côté sortie d'air, est disposée pratiquement de façon parallèle au ventilateur (5) du système (1) ventilateur - filtre.

4. Système de ventilation, de chauffage ou de climatisation selon l'une quelconque ou plusieurs des revendications 1 à 3, **caractérisé en ce que** le filtre (7) du système (1) ventilateur - filtre est disposé pour filtrer l'air dirigé à travers le système diffuseur d'air (2), la filtration se produisant aussi bien dans un fonctionnement en mode air recyclé que dans un fonctionnement en mode air frais du système de ventilation, de chauffage ou de climatisation.

5. Système de ventilation, de chauffage ou de climatisation selon l'une quelconque ou plusieurs des revendications 1 à 4, **caractérisé en ce qu'**il est prévu, au-dessous du filtre (7), un orifice d'évacuation (14) pour l'eau usée et l'eau de condensation.

6. Système de ventilation, de chauffage ou de climatisation selon l'une quelconque ou plusieurs des revendications 1 à 5, **caractérisé en ce que** le filtre (7) présente, sur une face du dessous, un couvercle démontable (18).

7. Système de ventilation, de chauffage ou de climatisation selon l'une quelconque ou plusieurs des revendications 1 à 6, **caractérisé en ce que** le flux d'air frais (F) passant par l'entrée d'air frais (15) est réglable par un premier volet mobile (13), en particulier par un volet à tambour.

8. Système de ventilation, de chauffage ou de climatisation selon l'une quelconque ou plusieurs des revendications 1 à 7, **caractérisé en ce qu'**un flux d'air recyclé (U) est dirigé à travers le système diffuseur d'air (2) via une entrée d'air recyclé (17), jusqu'au filtre (7).

9. Système de ventilation, de chauffage ou de climatisation selon la revendication 8, **caractérisé en ce que** le flux d'air recyclé (U) passant par l'entrée d'air recyclé (17) est réglable par un second volet mobile, en particulier par un volet à tambour.

10. Système de ventilation, de chauffage ou de climatisation selon l'une quelconque ou plusieurs des revendications 1 à 9, **caractérisé en ce que** le filtre (7) placé dans le système de climatisation est monté pratiquement de façon verticale.

11. Système de ventilation, de chauffage ou de climatisation selon l'une quelconque ou plusieurs des revendications 8 à 10, **caractérisé en ce que** le flux d'air frais (F) ou le flux d'air recyclé (U) qui est dirigé à travers le filtre (7) et qui sort par ledit filtre au niveau de la seconde surface (11), côté sortie d'air, a traversé le ventilateur (5) et continue à être dirigé à travers le système diffuseur d'air (2), jusqu'à un évaporateur (3) du système de climatisation.

12. Système de ventilation, de chauffage ou de climatisation selon l'une quelconque ou plusieurs des revendications 1 à 11, **caractérisé en ce que** le ventilateur (5) présente l'arbre (8) qui est placé horizontalement par rapport au système de ventilation, de chauffage ou de climatisation, et une roue de ventilateur (9).

13. Système de ventilation, de chauffage ou de climatisation selon l'une quelconque ou plusieurs des revendications 1 à 12, **caractérisé en ce que** le système de climatisation comprend en outre un condenseur servant au refroidissement du flux d'air et / ou au moins un dispositif de chauffage pour le chauffage du flux d'air et / ou un dispositif de chauffage auxiliaire électrique et / ou un détendeur.
